# FASCICULE DE BREVET EUROPEEN

(11) **EP 3 667 845 B1**
(45) Date de publication et mention de la délivrance du brevet: **15.09.2021**
(21) Numéro de dépôt: 19214707.2
(22) Date de dépôt: 10.12.2019
(51) Int. Cl.: H02B 1/36

(54) **SUPPORT PRÉFABRIQUÉ POUR UN DISPOSITIF ÉLECTRIQUE MONTABLE SUR BAIE ET DISPOSITIF ÉLECTRIQUE COMPORTANT UN TEL SUPPORT**
FERTIGHALTERUNG FÜR EINEN ELEKTRISCHEN EINSCHUB, UND ELEKTRISCHE VORRICHTUNG, DIE EINE SOLCHE HALTERUNG UMFASST
PREFABRICATED SUPPORT FOR AN ELECTRICAL DEVICE TO BE MOUNTED ON A RACK AND ELECTRICAL DEVICE COMPRISING SUCH A SUPPORT

(30) Priorité: 11.12.2018 FR 1872704
(43) Date de publication de la demande: 17.06.2020
(73) Titulaire: Schneider Electric Industries SAS, 92500 Rueil Malmaison (FR)
(72) Inventeur: MUNIRAJU, Pradeep, 38050 GRENOBLE Cedex 09 (FR); GASPARETTI, Bruno, 38050 GRENOBLE Cedex 09 (FR); CORBALAN, Jérôme, 38050 GRENOBLE Cedex 09 (FR); LINARES, Louis, 38050 GRENOBLE Cedex 09 (FR)
(74) Mandataire: Lavoix

(56) Documents cités:
- EP-A1- 2 309 611
- FR-B1- 2 776 465

## Description

La présente invention concerne un support préfabriqué pour un dispositif électrique montable sur baie ainsi qu'un dispositif électrique montable sur baie comportant un tel support.

On connaît des dispositifs électriques montables sur baie, se présentant généralement sous la forme de tiroirs débrochables destinés à être montés dans un logement, ou baie, correspondant d'une armoire électrique. Le brevet FR-2 776 465 B1 décrit un exemple d'un dispositif électrique montable sur baie pour une installation de distribution électrique. Ce dispositif électrique comporte un ou plusieurs appareils électriques, tels que des appareils de commutation électrique, montés sur une platine tenant lieu de support.

Un inconvénient de ces dispositifs connus réside dans le fait qu'ils doivent être construits sur mesure en fonction de l'application à laquelle ils sont destinés.

Il existe donc un besoin pour un même dispositif électrique montable sur baie qui présente une conception simplifiée.

C'est à ce problème qu'entend plus particulièrement remédier l'invention, en proposant un nouveau support préfabriqué pour dispositif électrique montable sur baie.
A cet effet, l'invention concerne un support préfabriqué pour un dispositif électrique montable sur baie, le support comprenant une plaque, un corps monobloc monté sur la plaque, un connecteur électrique, placé sur une face arrière du support préfabriqué et des conducteurs électriques préformés comportant chacun une première extrémité et une deuxième extrémité, le corps définissant, en face avant du support, un logement de réception destiné à recevoir un appareil de commutation électrique, le corps délimitant également un passage dans lequel les conducteurs électriques sont logés, chaque première extrémité de chaque conducteur électrique étant raccordée au connecteur électrique et chaque deuxième extrémité de chaque conducteur électrique émergeant à l'intérieur du logement de réception, le corps comportant une paroi de séparation électriquement isolante s'étendant perpendiculairement depuis un bord de la plaque, ladite paroi et au moins un coté de la plaque formant une face latérale du support, ladite face latérale comportant au moins un premier organe de fixation et au moins un deuxième organe de fixation, chaque deuxième organe de fixation étant de forme complémentaire au premier organe de fixation, chaque premier organe et chaque deuxième organe étant adaptés pour être engagés avec, respectivement, un autre deuxième organe et un autre premier organe.

Grâce à l'invention, un tel support permet de construire des dispositifs électriques de façon modulaire, faisant intervenir un nombre de pièces limitées, les pièces étant préfabriquées et avec des dimensions connues à l'avance. De telles pièces préfabriquées ont l'avantage de pouvoir être produites en grande quantité avec des coûts de fabrication relativement faibles.

Selon des aspects avantageux mais non obligatoires de l'invention, un tel support peut incorporer une ou plusieurs des caractéristiques suivantes, prises selon toute combinaison techniquement admissible :
- le premier organe de fixation est d'un seul tenant avec le corps et le deuxième organe de fixation est d'un seul tenant avec la plaque.
- le corps et la plaque sont réalisés en un matériau électriquement isolant.
- les premiers et deuxième organes sont adaptés pour être engagés avec, respectivement, un autre deuxième organe et un autre premier organe.

Selon un autre aspect, l'invention a également pour objet un dispositif électrique comprenant au moins un support préfabriqué tel que décrit préalablement et un appareil de commutation électrique, l'appareil de commutation électrique étant disposé au moins partiellement dans le logement de réception du au moins un support préfabriqué et étant raccordé électriquement à la deuxième extrémité des conducteurs électriques du au moins un support préfabriqué.

Selon des aspects avantageux mais non obligatoires de l'invention, un tel dispositif électrique peut incorporer une ou plusieurs des caractéristiques suivantes, prises selon toute combinaison techniquement admissible :
- le dispositif comprend un unique support préfabriqué tel que défini précédemment; une cloison additionnelle électriquement isolante fixée à la paroi de séparation et comprenant un premier organe de fixation et un deuxième organe de fixation analogues aux, respectivement, premier et deuxième organes dudit support, le premier organe et le deuxième organe de fixation de la cloison électriquement isolante étant emboîtés, respectivement, avec le deuxième et le premier organes de la paroi de séparation, de manière à fixer la cloison à la paroi de séparation.
- le dispositif comprend un premier support préfabriqué tel que défini précédemment ; un deuxième support préfabriqué tel que défini précédemment, identique ou similaire au premier support préfabriqué, le deuxième support étant fixé au premier support, le premier organe du premier support étant engagé avec le deuxième organe du deuxième support et le deuxième organe du premier support étant engagé avec le premier organe du deuxième support et les parois de séparation respectives des deux supports étant juxtaposées et en contact l'une avec l'autre, définissant ainsi une surface de contact.

- le dispositif comporte en outre un capot fixé aux premier et deuxième supports en face avant du dispositif.
- le dispositif comprend en outre deux poignées de préhension, chaque poignée étant respectivement solidaire d'un desdits supports, chaque poignée faisant saillie par rapport à la face avant de chaque support, les poignées étant identiques et disposées symétriquement l'une à l'autre par rapport à un même plan de jonction formé par la surface de contact entre les deux supports.
- au moins une desdites poignées comprend un mécanisme d'indexation de la position du dispositif électrique dans une baie, la poignée étant équipée d'une gâchette de commande manuelle de ce mécanisme.

L'invention sera mieux comprise et d'autres avantages de celle-ci apparaîtront plus clairement à la lumière de la description qui va suivre, de plusieurs modes de réalisation de l'invention conforme à son principe, donnée uniquement à titre d'exemple et faite en référence aux dessins annexés dans lesquels :
[Fig 1] la figure 1 est une vue isométrique d'un dispositif électrique selon un premier mode de réalisation de l'invention ;
[Fig 2] la figure 2 est une vue éclatée du dispositif électrique de la figure 1 ;
[Fig 3] la figure 3 est une vue isométrique d'un support préfabriqué utilisé dans le dispositif électrique des figures 1 et 2 ;
[Fig 4] la figure 4 est une vue isométrique du support préfabriqué selon un angle différent ;
[Fig 5] la figure 5 est une vue isométrique partiellement écorchée du dispositif électrique de la figure 1 ;
[Fig 6] la figure 6 est une vue isométrique d'un dispositif électrique selon un deuxième mode de réalisation ; et
[Fig 7] la figure 7 est une vue isométrique du dispositif électrique selon un troisième mode de réalisation.

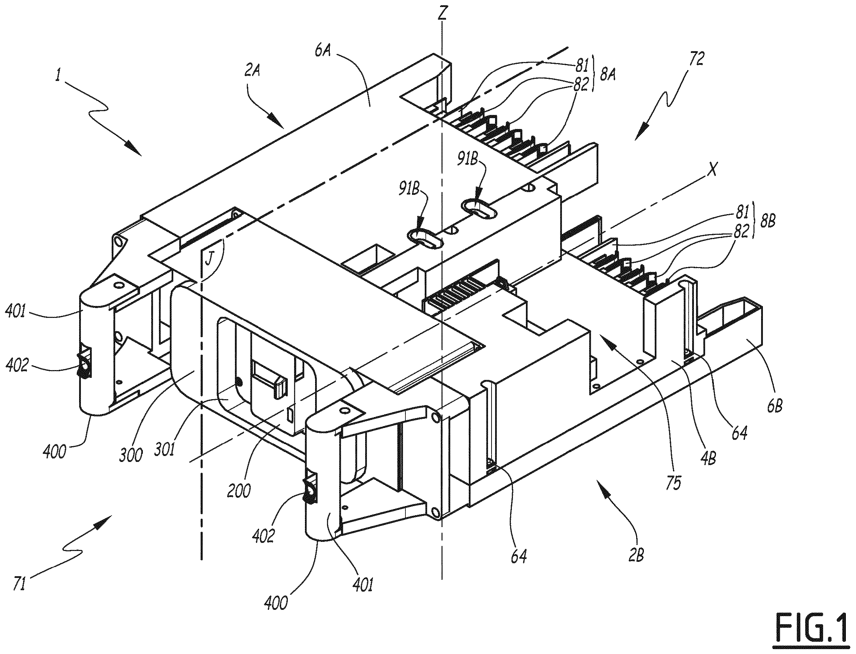

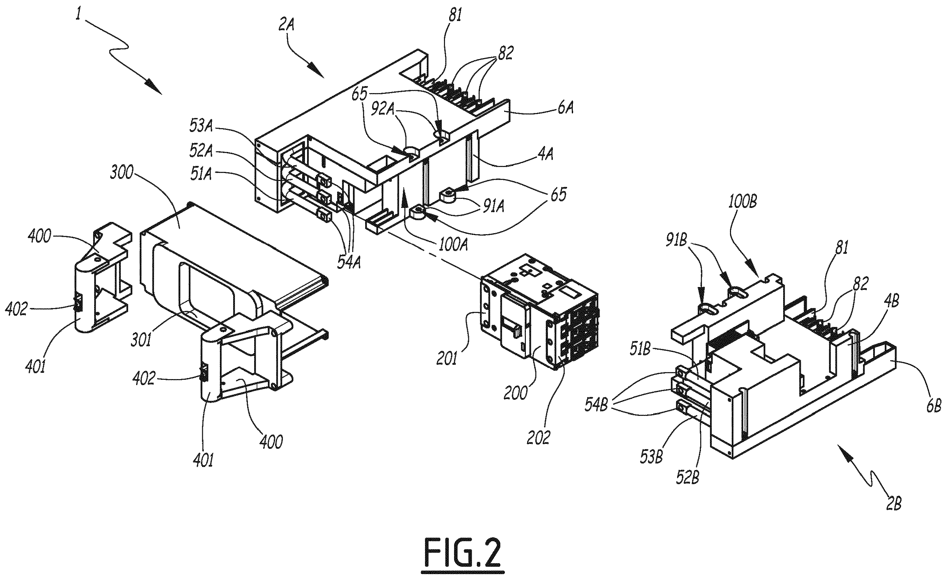

Les figures 1 et 2 représentent un dispositif électrique 1 montable sur baie.

Par « montable sur baie » (« rack-mountable » en anglais), on entend ici que le dispositif électrique 1 peut être réversiblement inséré ou retiré d'une installation électrique telle qu'une armoire électrique (« rack » en anglais) comportant des baies de montage formant des logements de réception.

Par exemple, le dispositif électrique 1 peut être inséré ou retiré d'une baie de montage par un mouvement de translation selon un axe longitudinal X, à la manière d'un tiroir.

Selon des exemples, le dispositif électrique 1 est ainsi déplaçable entre une position connectée, dans laquelle il est électriquement connecté à un conducteur de puissance de l'installation électrique, et une position déconnectée, dans laquelle il est isolé dudit conducteur de l'installation électrique.

Selon des variantes, le dispositif électrique 1 peut aussi être dans une position intermédiaire entre les positions connectée et déconnectée, dite position de test. Dans cette position intermédiaire, le dispositif 1 est isolé dudit conducteur de puissance tout en étant connecté à une liaison de données et/ou de commande à basse tension de l'installation électrique.

A titre d'exemple illustratif, l'installation électrique peut être une installation de distribution d'électricité incluant des conducteurs électriques de puissance tels que des jeux de barres conductrices, pour distribuer un courant électrique.

Par exemple, l'intensité du courant électrique circulant dans les conducteurs électriques de puissance est supérieure ou égale à 50 A, ou supérieure ou égale à 100 A.

Comme on le comprendra à la lecture de la description qui va suivre, le dispositif 1, illustré aux figures 1 et 2 selon un premier mode de réalisation, comporte, entre autres, un premier support préfabriqué 2A et un deuxième support préfabriqué 2B, de préférence similaires ou identiques, désignés de façon générale par la référence 2.

Comme on le comprendra à la lecture de la description qui va suivre, les supports 2A et 2B sont fixés l'un à l'autre et forment ensemble une armature du dispositif 1.

Le dispositif 1 comporte également un appareil électrique 200, décrit ci-après, qui est associé aux supports préfabriqués 2A et 2B.

L'appareil 200 est destiné à être connecté avec l'installation électrique lorsque le dispositif 1 est en position connectée. Par exemple, l'appareil 200 est un appareil de commutation et/ou de protection électrique, tel qu'un disjoncteur, ou un contacteur, ou un sectionneur, ou un relais, ou bien d'autres exemples encore.

Par exemple, l'appareil 200 comporte des plages de raccordement électrique amont 201 et des plages de raccordement électrique aval 202.

L'appareil 200 peut aussi comporter en façade un organe de commande, tel qu'un levier ou un bouton, ou un indicateur, tels qu'un témoin lumineux.

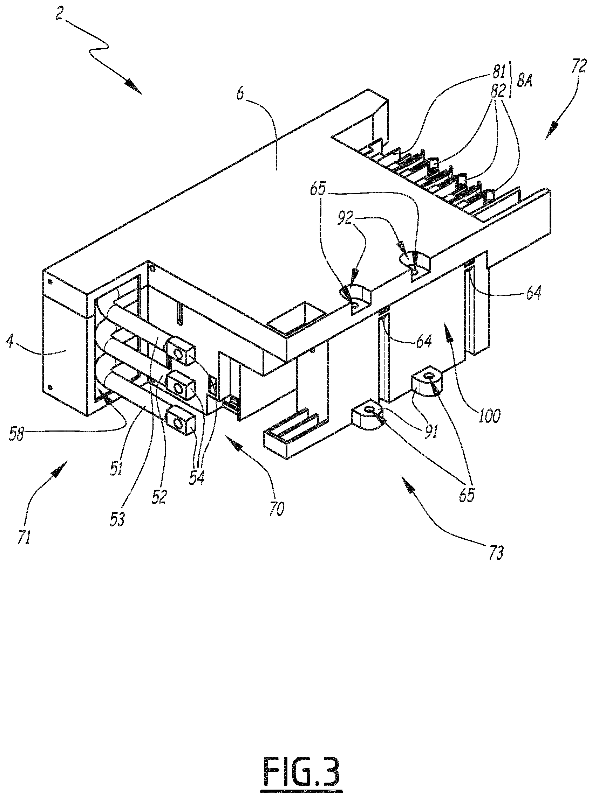

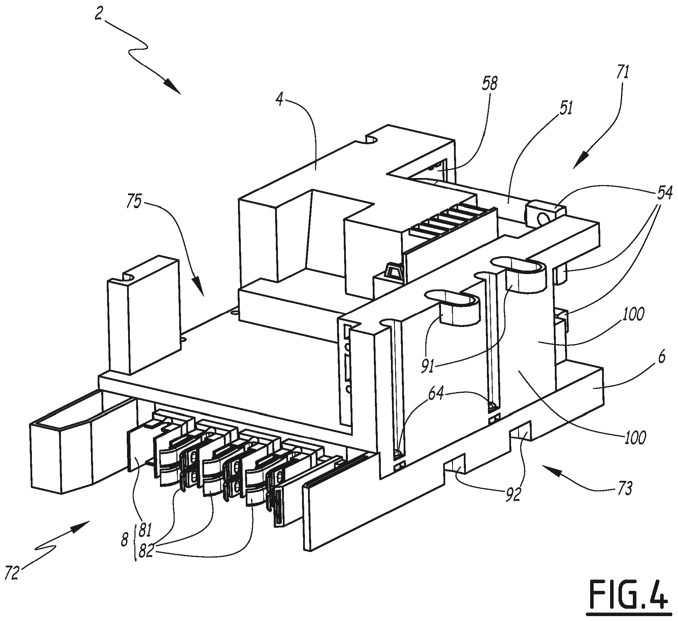

Le support préfabriqué 2, représenté isolément aux figures 3 et 4, comprend un corps 4 monobloc ainsi qu'une plaque 6 rigide, qui est montée sur le corps 4, de manière à faire office de couvercle.

Le corps 4 et la plaque 6 sont par exemple formés en un matériau électriquement isolant, tel qu'un polymère moulé ou thermodurci, par exemple du polyamide. Le ou les matériaux utilisés pour la plaque 6 et pour le corps 4 peuvent être identiques entre eux ou différents.

Le support 2 est dit être « préfabriqué » dans le sens où il est déjà assemblé. Notamment, le support 2 permet, de par sa forme et sa conception générale, de servir de brique de base pour construire le dispositif 1.

Le support 2 comporte ici une face avant 71, une face arrière 72, parallèle à la face 71, ainsi qu'une face latérale 73 qui est perpendiculaire aux faces 71 et 72.

Le support 2 comporte un connecteur électrique 8, ou connecteur de puissance, ici monté sur la plaque 6 en face arrière 72. Le connecteur 8 permet de raccorder le dispositif 1 à l'installation électrique lorsque le dispositif 1 est monté en position connectée.

Par exemple, le connecteur électrique 8 comporte une base 81 contenant des pinces 82 électriquement conductrices. En position connectée, chaque pince 82 enserre un conducteur électrique de l'installation électrique, permettant le passage du courant vers le dispositif 1. En variante, le connecteur 8 peut être réalisé différemment.

En pratique, lorsque le dispositif 1 est destiné à être utilisé dans une installation électrique polyphasée, le connecteur 8 comporte au moins une pince 82 par phase.

Le corps 4 définit un logement de réception 70, ici situé en face avant 71. Le logement de réception 70 est destiné à recevoir l'appareil de commutation électrique 200, par exemple de telle sorte que l'appareil 200 est au moins partiellement logé dans le logement de réception 70.

La plaque 6 est avantageusement conformée pour qu'en face avant 71, les bords de la plaque 6 soient alignés avec les bords du corps 4, de manière à former un prolongement du logement 70.

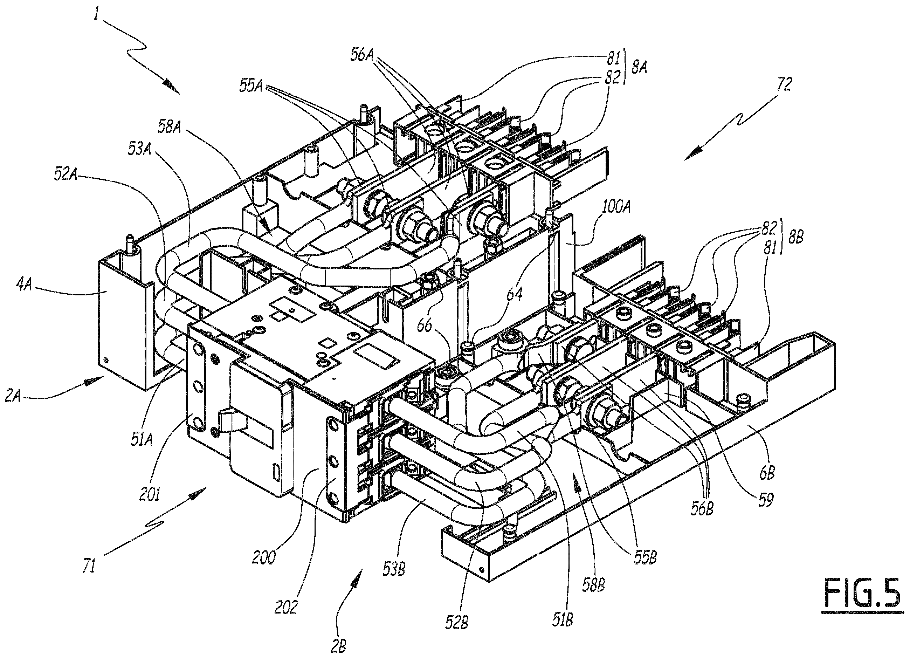

Le dispositif 2 comporte également des conducteurs électriques 51, 52 et 53 pour raccorder le connecteur 8 à l'appareil 200. Les conducteurs électriques 51, 52 et 53 sont par exemple logés, et plus particulièrement fixés, à l'intérieur de passages 58 délimités à l'intérieur du corps 4, comme cela ressort plus particulièrement de la figure 5.

De manière générale, les conducteurs 51, 52, 53 sont préférentiellement préformés, de manière à présenter des formes et des dimensions prédéfinies. Les conducteurs 51, 52, 53 sont réalisés en un matériau conducteur, tel que du cuivre, et sont ici rigides.

Chaque conducteur 51, 52 ou 53 est ici associé à une phase d'un courant polyphasé. Dans cet exemple, les conducteurs électriques 51, 52 et 53 sont au nombre de trois, pour acheminer un courant triphasé, bien qu'en variante ce nombre peut être différent, en fonction de la nature de l'installation électrique.

Les conducteurs 51, 52 et 53 sont par exemple des barres tubulaires pleines ou creuses, comprenant chacune des portions rectilignes, propres à chaque conducteur 51, 52 et 53, les portions rectilignes étant prolongées par des portions coudées, propres à chaque conducteur 51, 52 et 53. Chaque conducteur 51, 52 et 53 s'étend entre une première extrémité 55 et une deuxième extrémité 54.

Les premières extrémités 55 de chaque conducteur électrique 51, 52, 53 sont connectées électriquement au connecteur 8. Par exemple, chaque extrémité 55 est raccordée électriquement à une pince 82 du connecteur 8 par l'intermédiaire d'une plaque conductrice 56, ici au moyen d'une vis et d'un boulon. Pour assurer un contact satisfaisant entre chaque première extrémité 55 et chaque plaque conductrice 56, la première extrémité 55 de chaque conducteur 51, 52 et 53 présente par exemple une forme plane.

Chaque conducteur électrique 51, 52 et 53 émerge dans le logement de réception 70 au niveau de la face avant 71 du support 2, comme cela est visible sur la figure 2. Plus précisément, les deuxièmes extrémités 54 émergent dans le logement 70, en faisant saillie par rapport au reste du corps 4, de manière à pouvoir être raccordées à l'appareil électrique 200.

Par exemple, les extrémités 54 ont ici une tête aplatie pour faciliter le raccordement des extrémités 54 à l'appareil 200. On comprend néanmoins que la forme des extrémités 54 peut être adaptée en fonction de la nature de l'appareil électrique 200.

Comme illustré sur la figure 5, les passages 58 comportent des cloisons de séparation 59 qui isolent électriquement les conducteurs 51, 52, et 53 deux à deux, au moins au niveau de leurs extrémités 55 dans la zone de raccordement avec le connecteur 8. De préférence, les cloisons de séparation 59 sont formées d'un seul tenant avec le reste du corps 4.

De retour aux figures 3 et 4, le corps 4 comporte une paroi de séparation 100 électriquement isolante. La paroi 100 s'étend ici perpendiculairement à la plaque 6 depuis un bord de la plaque 6. La paroi 100 et au moins un côté le bord de la plaque 6 forment ensemble la face latérale 73 du support 2. En d'autres termes, la face latérale 73 est ici formée par la réunion de la paroi de séparation 100 au moins un coté de la plaque 6.

Par exemple, une ou plusieurs rainures sont ménagées dans la paroi 100 pour permettre le passage d'un outil, tel un tournevis, facilitant ainsi la mise en place et le serrage d'un ou de plusieurs éléments 64, tels que des vis, qui solidarisent la plaque 6 au corps 4.

De façon particulièrement avantageuse, conformément à des modes de réalisation de l'invention, le support 2 est conformé pour être emboîté avec un autre support 2 analogue ou identique.

Pour cela, le support 2 comporte, ici formés sur la face latérale 73, au moins un premier organe de fixation 91 et au moins un deuxième organe de fixation 92. Chaque deuxième organe de fixation 92 présente une forme complémentaire à la forme de chaque premier organe de fixation 91.

Chaque premier organe 91 est ainsi apte à être engagé ou imbriqué avec un deuxième organe 92 correspondant, par exemple porté par un autre corps 2. Ainsi, les organes de fixation 91 et 92 forment un système d'assemblage, par exemple de type tenon-mortaise, permettant de fixer le corps 2 par emboîtage avec une structure correspondante portant un ou plusieurs premier organe 91 et/ou deuxième organe 92.

En pratique, la face latérale 73 comporte plusieurs premiers organes 91 et plusieurs deuxièmes organes 92. Le nombre de premiers organes 91 est ici identique au nombre de deuxième organes 92.

Dans les modes de réalisation illustrés, le corps 4 comprend deux premiers organes de fixation 91 et la plaque 6 comprend deux deuxièmes organes de fixation 92. Le ou les organes 91 sont d'un seul tenant avec le corps 4 et le ou les organes 92 sont d'un seul tenant avec la plaque 6.

En variante, le ou les deuxièmes organes 92 peuvent être portés par le corps 4, tandis que la plaque 6 comprend le ou les premiers organes de fixation 91. Selon d'autres variantes, le corps 4 et la plaque 6 peuvent chacun comprendre un ou plusieurs premiers organes 91 et un ou plusieurs deuxièmes organes 92. De nombreuses autres configurations sont possibles.

De préférence, les organes de fixation 91 sont formés d'un seul tenant avec le corps 4 et les organes de fixations 92 sont formés d'un seul tenant avec la plaque 6.

Des orifices 65 sont ici prévus dans les organes 91 et 92 pour permettre la mise en place de moyens de solidarisation 66, tels que des vis ou des rivets, afin de limiter le débattement des organes 91 dans les organes 92 lorsqu'un organe 91 est engagé dans un organe 92.

Les premiers organes 91 sont par exemple des excroissances, faisant saillie par rapport à la face latérale 73 de la paroi 100, tandis que les deuxièmes organes 92 forment des reliefs creux, de forme complémentaire aux excroissances des organes 91.

Les organes 91 et 92 permettent ainsi d'assurer l'assemblage et la fixation des supports 2A et 2B pour former l'armature du dispositif 1.

En se référant à nouveau aux figures 1, 2 et 5, la disposition des supports 2A et 2B est maintenant décrite plus en détail. Comme expliqué précédemment, les supports 2A et 2B sont similaires ou identiques et correspondant à deux exemplaires du support 2 décrit ci-dessus.

Dans la suite de la description, les éléments des supports 2A et 2B qui sont les mêmes que ceux décrits de façon générale pour le support 2 portent la même référence, augmentée, respectivement, du suffixe « A » ou « B ». La description des éléments du support 2 leur est également transposable.

Par exemple, les références 4A et 4B désignent, respectivement, le corps 4 des supports 2A et 2B. Les références 6A et 6B désignent, respectivement, la plaque 6 des supports 2A et 2B. La même convention de notation s'applique, notamment, pour les conducteurs 51, 52 et 53, pour la paroi de séparation 100 et pour les organes de fixation 91 et 92.

Dans cet exemple, les corps 2A et 2B sont identiques. En conséquence, les corps 4A et 4B sont identiques entre eux et les plaques 6A et 6B sont identiques entre elles. Le support 2B est néanmoins disposé en symétrie inverse par rapport au support 2A, c'est-à-dire que le support 2B est renversé par rapport au support 2A. Les faces latérales 73 respectives de chaque support 2A et 2B sont en contact l'une avec l'autre.

En configuration assemblé du dispositif 1, comme visible sur la figure 1, les supports 2A et 2B sont connectés entre eux. Notamment, les organes 92A sont insérés dans les organes 91B, tandis que les organes 91A sont insérés dans les organes 92B. Les parois 100A et 100B sont alors accolées l'une à l'autre et définissent ainsi une surface de contact entre les supports 2A et 2B. La surface de contact est matérialisée par un plan de jonction J, donné à titre d'illustration.

Dans cette configuration, l'appareil 200 est reçu à l'intérieur des logements 70 respectivement définis par les supports 2A et 2B. Les conducteurs 51A, 52A et 53A raccordent la plage amont 201 de l'appareil 200 au connecteur 8A et les conducteurs 51B, 52B et 53B raccordent la plage aval 202 de l'appareil 200 au connecteur 8B. Par exemple, l'extrémité 54A de chaque conducteur 51A, 52A et 53A est alignée avec l'extrémité 54B du conducteur 51B, 52B et 53B correspondant.

Les plaques 6A et 6B sont décalées en hauteur selon un axe Z, ici disposé verticalement, l'axe Z étant ici perpendiculaire aux plaques 6A et 6B. Autrement dit, dans cet exemple, la plaque 6A est assimilable à un couvercle monté sur le corps 4A, tandis que la plaque 6B sert de plaque de fond au corps 4B. Le décalage en hauteur entre les plaques 6A et 6B est ici tel que les plaques 6A et 6B ne sont pas en contact l'une avec l'autre. A l'image des plaques 6A et 6B, les connecteurs de puissance 8A et 8B sont également décalés en hauteur selon l'axe Z.

Dans cette configuration assemblée du dispositif 1, les parois de séparation électriquement isolantes 100A et 100B séparent et isolent les conducteurs 51A, 52A, 53A du support 2A des conducteurs 51B, 52B, 53B du support 2B. Par exemple, les connecteurs 8A et 8B forment, respectivement, une entrée et une sortie électrique du dispositif 1.

Comme illustré sur la figure 1, le dispositif 1 comporte en outre un capot de protection 300.

Le capot 300 est avantageusement fixé aux premier et deuxième supports 2A et 2B sur la face avant 71. Le capot 300 peut être monobloc, ou il peut être composé de plusieurs pièces solidarisées entre elles. Le capot 300 est par exemple en matière plastique.

Le capot de protection 300 comporte avantageusement une fenêtre traversante 301, donnant accès à la face avant de l'appareil 200, par exemple pour donner accès à un organe de commande de l'appareil 200. Le capot 300 permet notamment de protéger les conducteurs 51, 52 et 53.

Pour manipuler le dispositif 1, par exemple pour le rentrer ou le sortir d'une baie, le dispositif 1 peut également comporter deux poignées de préhension 400, disposées en face avant 71.

Chaque poignée 400 est ici respectivement solidaire de l'un des supports 2A ou 2B. Chaque poignée 400 fait saillie par rapport à la face avant 71 de chaque support 2A ou 2B.

De préférence, les poignées 400 sont de formes identiques et sont disposées symétriquement l'une à l'autre, ici de part et d'autre du plan de jonction J.

A titre d'exemple illustratif et non nécessairement limitatif, chaque poignée 400 comporte une zone de préhension 401 en forme de cylindre orienté verticalement. Les poignées 400 peuvent être monobloc ou bien être composées de plusieurs pièces rapportées.

Selon des modes de réalisation optionnels, au moins l'une des deux poignées 400 comprend un mécanisme d'indexation de la position du dispositif 1 dans la baie.

Dans l'exemple illustré, les deux poignées 400 comportent ce mécanisme, mais en variante seule l'une d'entre elles en est équipée. Dans ce cas, on comprend que les deux poignées du dispositif 1 ne sont alors pas identiques. Ce mécanisme d'indexation est par exemple contenu à l'intérieur de la poignée 400.

Par exemple, ce mécanisme est actionné par l'intermédiaire d'une gâchette de commande manuelle 402 de ce mécanisme, la gâchette 402 étant disposée à l'intérieur de la poignée 400. La gâchette 402 fait ici saillie par rapport à la surface de préhension 401 de la poignée 400, de manière à être accessible pour un opérateur.

Un exemple d'un procédé d'assemblage du dispositif 1 est maintenant donné à des fins d'illustration, notamment en référence à la figure 2.

Dans un premier temps, l'appareil 200 est raccordé aux extrémités 54A des conducteurs 51A, 52A et 53A via la plage de raccordement amont 201, puis les extrémités 54B des conducteurs 51B, 52B et 53B sont raccordées à l'appareil 200 via la plage de raccordement aval 202 en rapprochant le support 2B du support 2A.

Les organes 91B sont alors engagés avec les organes 92A et les organes 91A sont engagés avec les organes 92B. Le cas échéant, les éléments de fixation 66 sont mis en place dans les orifices 65 puis serrés. Le capot 300 est ensuite placé et fixé en face avant 71, puis les deux poignées 400 sont disposées et solidarisées respectivement sur l'un des supports 2A ou 2B.

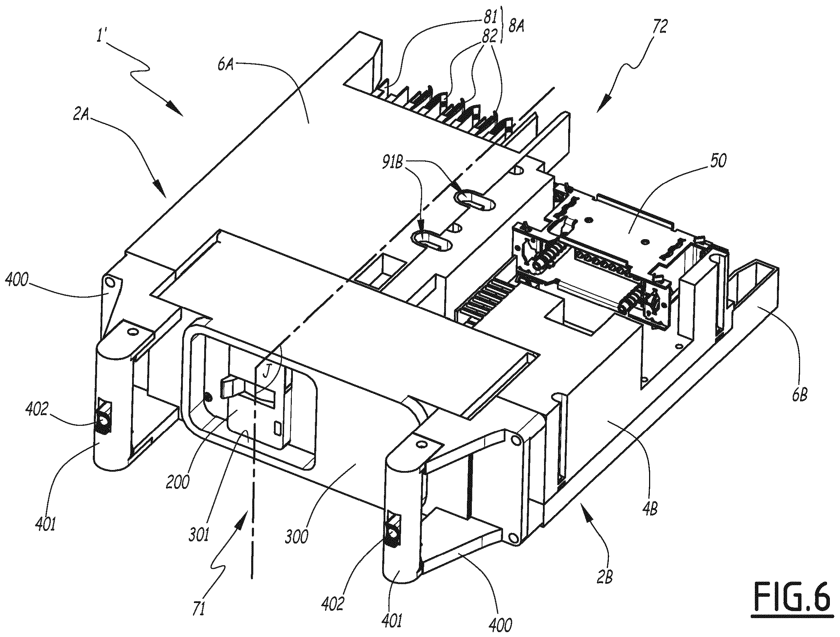

La figure 6 représente un dispositif électrique 1' selon un deuxième mode de réalisation de l'invention. Les éléments de ce mode de réalisation qui sont analogues au premier mode de réalisation portent les mêmes références et ne sont pas décrits en détail, dans la mesure où la description ci-dessus peut leur être transposée.

De façon optionnelle, le support 2 comporte au moins un logement additionnel 75 de réception d'un appareil électrique auxiliaire, tel qu'un contacteur, et un connecteur auxiliaire 50 disposé au niveau de la face arrière 72, ici sur le support 2B.

Par exemple, le connecteur auxiliaire 50 permet de connecter le dispositif 1', et notamment l'appareil électrique auxiliaire, à la liaison de commande ou à tout autre circuit électrique auxiliaire de l'installation électrique.

Selon des modes de mise en œuvre, le connecteur auxiliaire 50 est déplaçable en translation, ici parallèlement à l'axe X, entre une position déployée vers l'arrière du dispositif 1' et à l'extérieur de celui-ci, et une position rebutée.

Par exemple, le connecteur auxiliaire 50 déplaçable permet d'implémenter la position intermédiaire précédemment définie.

Dans la position connectée, le dispositif 1' est raccordé à la fois au conducteur de puissance par ses connecteurs de puissance 8A et 8B, et à la liaison de commande par le connecteur auxiliaire 50, qui est alors dans la position rebutée. Dans la position intermédiaire dite de test, le conducteur auxiliaire 50 est dans sa position déployée, ce qui lui permet de rester connecté à la liaison de commande alors que les connecteurs de puissance 8A et 8B sont déconnectés des conducteurs de puissance.

Selon d'autres modes de réalisation non illustrés, le connecteur auxiliaire 50 est monté fixement sur le support 2 du dispositif électrique. Dans ce cas, la position intermédiaire n'est pas implémentée et le connecteur auxiliaire 50 est connecté et déconnecté simultanément avec le connecteur de puissance 8 ou les connecteurs 8A et 8B.

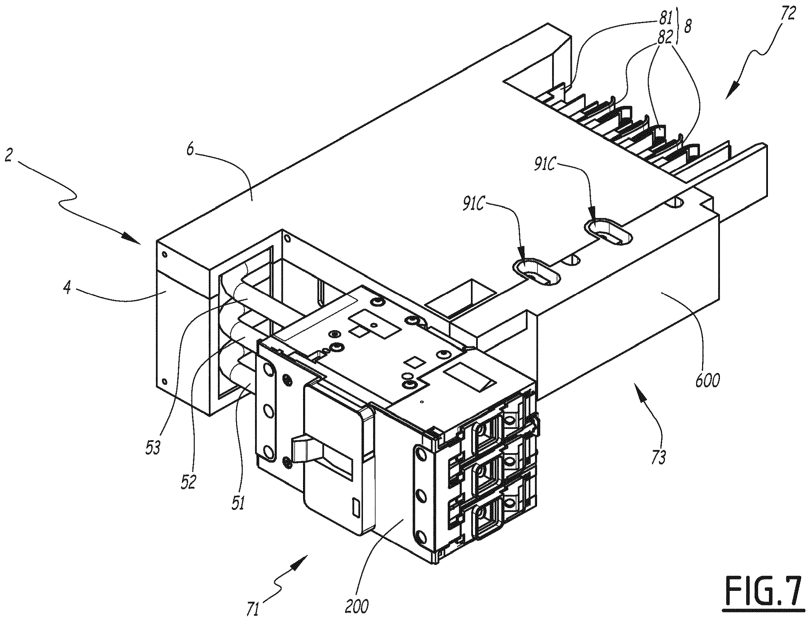

La figure 7 représente un troisième mode de réalisation de l'invention. Les éléments de ce mode de réalisation qui sont analogues au premier mode de réalisation portent les mêmes références et ne sont pas décrits en détail, dans la mesure où la description ci-dessus peut leur être transposée.

Selon le troisième mode de réalisation, le dispositif 1 ne comprend qu'un seul support 2 tel que défini précédemment. Le support 2 peut néanmoins être fixé à une cloison additionnelle 600 électriquement isolante extérieure au support 2 pour former un dispositif électrique de forme plus réduite. La cloison additionnelle 600 est alors fixée à la paroi 100 du support 2 au moyen du système de fixation précédemment décrit.

La cloison 600 comprend un premier organe de fixation 91C analogue au premier organe 91 et un deuxième organe de fixation analogue au deuxième organe 92, le deuxième organe de la cloison 600 n'étant pas visible sur les figures. Ainsi, en configuration assemblée, le premier organe 91C est engagé avec le deuxième organe 92 de la paroi 100, tandis que le deuxième organe de la cloison 600 est engagé avec le premier organe 91 de la paroi 100. La cloison 600 permet de fermer le corps 4 du support 2. L'ensemble ainsi formé peut être inséré tel quel dans une installation électrique, ou accouplé avec un autre élément pour former un autre dispositif électrique.

Les modes de réalisation ci-dessus permettent de construire un dispositif électrique montable sur baie de façon modulaire et simplifiée, notamment en utilisant un nombre de pièces réduit. En particulier, comme les supports 2A et 2B sont analogues voire identiques, le nombre total de pièces différentes pour former le dispositif 1 est réduit. Cela permet de réduire le coût unitaire de fabrication du dispositif 1 et d'en simplifier à la fois la fabrication à l'échelle industrielle et l'assemblage par le client.

Le support 2 peut ainsi servir de base pour construire des dispositifs différents et peut donc être utilisé dans un grand nombre d'applications différentes.

Le système d'assemblage formé par l'association des organes 91 et 92 permet de fixer rapidement et simplement un support 2 à un autre élément correspondant, par exemple pour joindre les supports 2A et 2B entre eux.

La disposition complémentaire des organes 91 et 92 sur les supports 2A et 2B ou, le cas échéant, sur le support 2 et la cloison 600, assure aussi une fonction de détrompage et empêche une juxtaposition de ces éléments d'une façon erronée ou non prévue.

Comme le support 2 est préassemblé, il n'est pas nécessaire de construire intégralement l'armature du dispositif, notamment en raccordant l'appareil 200 en tirant des liaisons câblées, ce qui procure un gain de temps pour l'assembleur.

Notamment, l'intégration de conducteurs 51, 52 et 53 préformés dans le corps 4 lui aussi préformé permet, lors de l'assemblage du dispositif 1, de monter et de raccorder l'appareil 200 de façon rapide et aisé, tout en assurant une protection et une isolation satisfaisantes des conducteurs 51, 52 et 53, notamment pour éviter une connexion électrique intempestive entre l'entrée et la sortie électrique du dispositif 2.

Grâce à la forme similaire des supports 2 ainsi qu'à leur configuration spatiale, le dispositif 1 est réversible et peut ainsi être inséré dans une baie de réception même après avoir été retourné sur lui-même, par exemple par rotation sur lui-même autour de l'axe X.

Toute caractéristique de l'un des modes de réalisation ou variante décrite ci-dessus, peut être mise en œuvre dans les autres modes de réalisation et variantes décrits.

## Revendications

1. Support préfabriqué (2 ; 2A, 2B) pour un dispositif électrique montable sur baie, **caractérisé en ce que** le support comprend :
- une plaque (6 ; 6A, 6B) ;
- un corps (4 ; 4A, 4B) monobloc monté sur la plaque ;
- un connecteur électrique (8 ; 8A, 8B), placé sur une face arrière du support préfabriqué ;
- des conducteurs électriques (51, 52, 53 ; 51A, 52A, 53A ; 51B, 52B, 53B) préformés comportant chacun une première extrémité (55) et une deuxième extrémité (54) ;
le corps définissant, en face avant du support, un logement de réception (70) destiné à recevoir un appareil de commutation électrique (200), le corps délimitant également un passage (58) dans lequel les conducteurs électriques sont logés, chaque première extrémité de chaque conducteur électrique étant raccordée au connecteur électrique et chaque deuxième extrémité de chaque conducteur électrique émergeant à l'intérieur du logement de réception, le corps comportant une paroi de séparation (100) électriquement isolante s'étendant perpendiculairement depuis un bord de la plaque, ladite paroi et au moins un coté de la plaque formant une face latérale du support, ladite face latérale comportant au moins un premier organe de fixation (91 ; 91A, 91B) et au moins un deuxième organe de fixation (92 ; 92A, 92B), chaque deuxième organe de fixation étant de forme complémentaire au premier organe de fixation, chaque premier organe et chaque deuxième organe étant adaptés pour être engagés avec, respectivement, un autre deuxième organe et un autre premier organe.

2. Support préfabriqué selon la revendication 1, **caractérisé en ce que** le premier organe de fixation (91 ; 91A, 91B) est d'un seul tenant avec le corps (4) et **en ce que** le deuxième organe de fixation (92 ; 92A, 92B) est d'un seul tenant avec la plaque (6).

3. Support préfabriqué selon la revendication 1 ou 2, **caractérisé en ce que** le corps (4) et la plaque (6) sont réalisés en un matériau électriquement isolant.

4. Dispositif électrique, **caractérisé en ce qu'**il comprend au moins un support préfabriqué, selon l'une quelconque des revendications 1 à 3, et un appareil de commutation électrique (200), l'appareil de commutation électrique étant disposé au moins partiellement dans le logement de réception (70) du au moins un support préfabriqué et étant raccordé électriquement à la deuxième extrémité des conducteurs électriques du au moins un support préfabriqué.

5. Dispositif électrique selon la revendication 4, **caractérisé en ce que** le dispositif comprend :
- un unique support préfabriqué (2) selon l'une des revendications 1 à 3 ;
- une cloison additionnelle (600) électriquement isolante fixée à la paroi de séparation et comprenant un premier organe de fixation (91C) et un deuxième organe de fixation analogues aux, respectivement, premier et deuxième organes dudit support, le premier organe et le deuxième organe de fixation de la cloison électriquement isolante étant emboîtés, respectivement, avec le deuxième (92) et le premier organes (91) de la paroi de séparation (100), de manière à fixer la cloison à la paroi de séparation.

6. Dipositif électrique selon la revendication 4 ou 5, **caractérisé en ce qu'**il comprend :
- un premier support préfabriqué (2A) selon l'une quelconque des revendications 1 à 3,
- un deuxième support préfabriqué (2B) selon la revendication 1 à 3, identique ou similaire au premier support préfabriqué, le deuxième support étant fixé au premier support, le premier organe (91A) du premier support étant engagé avec le deuxième organe (92B) du deuxième support et le deuxième organe (92A) du premier support étant engagé avec le premier organe (91B) du deuxième support et les parois de séparation (100A, 100B) respectives des deux supports étant en contact l'une avec l'autre.

7. Dipositif électrique selon la revendication 6, comportant en outre un capot (300) fixé aux premier et deuxième supports en face avant du dispositif.

8. Dipositif électrique selon la revendication 6 ou 7, **caractérisé en ce que** le dispositif comprend en outre deux poignées de préhension (400), chaque poignée étant respectivement solidaire d'un desdits supports, chaque poignée faisant saillie par rapport à la face avant de chaque support, les poignées étant identiques et disposées symétriquement l'une à l'autre par rapport à un même plan de jonction (J) formé par la surface de contact entre les deux supports.

9. Dipositif électrique selon la revendication 8, **caractérisé en ce qu'**au moins une desdites poignées (400) comprend un mécanisme d'indexation de la position du dispositif électrique dans une baie, la poignée étant équipée d'une gâchette de commande (402) manuelle de ce mécanisme.

## Patentansprüche

1. Vorgefertigter Träger (2; 2A, 2B) für eine rack-montierbare elektrische Vorrichtung, **dadurch gekennzeichnet, dass** der Träger umfasst:
- eine Platte (6; 6A, 6B);
- einen einteiligen Körper (4; 4A, 4B), der auf der Platte montiert ist;
- eine elektrische Anschlussanordnung (8; 8A, 8B), die auf einer Rückseite des vorgefertigten Trägers angeordnet ist;
- vorgeformte elektrische Leiter (51, 52, 53; 51A, 52A, 53A; 51B, 52B, 53B) mit jeweils einem ersten Ende (55) und einem zweiten Ende (54);
wobei der Körper an der Vorderseite des Trägers einen Aufnahmeraum (70) zur Aufnahme einer elektrischen Schaltvorrichtung (200) definiert und der Körper auch einen Durchgang (58) begrenzt, in dem die elektrischen Leiter untergebracht sind, wobei jedes erste Ende jedes elektrischen Leiters mit der elektrischen Anschlussanordnung verbunden ist und jedes zweite Ende jedes elektrischen Leiters in den Aufnahmeraum mündet, der Körper eine elektrisch isolierende Trennwand (100) aufweist, die sich senkrecht von einem Rand der Platte aus erstreckt, wobei die Wand und mindestens eine Seite der Platte eine Seitenfläche des Trägers bilden, wobei die Seitenfläche mindestens ein erstes Befestigungselement (91; 91A, 91B) und mindestens ein zweites Befestigungselement (92; 92A, 92B) aufweist, wobei jedes zweite Befestigungselement in seiner Form komplementär zu dem ersten Befestigungselement ist, wobei jedes erste Element und jedes zweite Element jeweils geeignet sind, mit einem anderen zweiten Element und einem anderen ersten Element in Eingriff gebracht zu werden.

2. Vorgefertigter Träger nach Anspruch 1, **dadurch gekennzeichnet, dass** das erste Befestigungselement (91; 91A, 91B) einstückig mit dem Körper (4) verbunden ist und dass das zweite Befestigungselement (92; 92A, 92B) einstückig mit der Platte (6) verbunden ist.

3. Vorgefertigter Träger nach Anspruch 1 oder 2, **dadurch gekennzeichnet, dass** der Körper (4) und die Platte (6) aus einem elektrisch isolierenden Material hergestellt sind.

4. Elektrische Vorrichtung, **dadurch gekennzeichnet, dass** sie mindestens einen vorgefertigten Träger nach einem beliebigen der Ansprüche 1 bis 3 und eine elektrische Schaltvorrichtung (200) umfasst, wobei die elektrische Schaltvorrichtung zumindest teilweise in dem Aufnahmeraum (70) des mindestens einen vorgefertigten Trägers angeordnet ist und mit dem zweiten Ende der elektrischen Leiter des mindestens einen vorgefertigten Trägers elektrisch verbunden ist.

5. Elektrische Vorrichtung nach Anspruch 4, **dadurch gekennzeichnet, dass** die Vorrichtung umfasst:
- einen einzigen vorgefertigten Träger (2) nach einem der Ansprüche 1 bis 3;
- eine zusätzliche elektrisch isolierende Zwischenwand (600), die an der Trennwand befestigt ist und ein erstes Befestigungselement (91C) und ein zweites Befestigungselement analog zu dem ersten und zweiten Element des Trägers aufweist, wobei das erste Befestigungselement und das zweite Befestigungselement der elektrisch isolierenden Zwischenwand in das zweite (92) und erste (91) Element der Trennwand (100) eingepasst sind, derart dass die Zwischenwand an der Trennwand befestigt wird.

6. Elektrische Vorrichtung nach Anspruch 4 oder 5, **dadurch gekennzeichnet, dass** sie umfasst:
- einen ersten vorgefertigten Träger (2A) nach einem beliebigen der Ansprüche 1 bis 3,
- einen zweiten vorgefertigten Träger (2B) nach dem Anspruch 1 bis 3, der zu dem ersten vorgefertigten Träger identisch oder ähnlich ist, wobei der zweite Träger an dem ersten Träger befestigt ist, wobei das erste Element (91A) des ersten Trägers mit dem zweiten Element (92B) des zweiten Trägers in Eingriff ist und das zweite Element (92A) des ersten Trägers mit dem ersten Element (91B) des zweiten Trägers in Eingriff ist, und wobei die jeweiligen Trennwände (100A, 100B) der beiden Träger in Kontakt miteinander sind.

7. Elektrische Vorrichtung nach Anspruch 6, die außerdem eine Abdeckung (300) aufweist, die an dem ersten und zweiten Träger an der Vorderseite der Vorrichtung angebracht ist.

8. Elektrische Vorrichtung nach Anspruch 6 oder 7, **dadurch gekennzeichnet, dass** die Vorrichtung außerdem zwei Handgriffe (400) umfasst, wobei jeder Griff jeweils mit einem der Träger verbunden ist und jeder Griff in Bezug auf die Vorderseite jedes Trägers vorsteht, wobei die Griffe identisch und symmetrisch in Bezug auf eine selbe Verbindungsebene (J) angeordnet sind, die durch die Kontaktfläche zwischen den beiden Trägern gebildet wird.

9. Elektrische Vorrichtung nach Anspruch 8, **dadurch gekennzeichnet, dass** mindestens einer der Griffe (400) einen Mechanismus zur Indexierung der Position der elektrischen Vorrichtung in einem Rack umfasst, wobei der Griff mit einem manuellen Auslöseelement (402) zum Steuern dieses Mechanismus ausgerüstet ist.

## Claims

1. Prefabricated support (2; 2A, 2B) for a rack-mountable electrical device, **characterised in that** the support comprises:
- a plate (6; 6A, 6B);
- a one-piece body (4; 4A, 4B) mounted on the plate;
- an electrical connector (8; 8A, 8B) positioned on a rear face of the prefabricated support;
- preformed electrical conductors (51, 52, 53; 51A, 52A, 53A; 51B, 52B, 53B) each having a first end (55) and a second end (54);
the body defining, on the front face of the support, a receiving housing (70) which is to receive an electrical switching apparatus (200), the body also delimiting a passage (58) in which the electrical conductors are housed, each first end of each electrical conductor being connected to the electrical conductor and each second end of each electrical conductor emerging inside the receiving housing, the body having an electrically insulating separating wall (100) extending perpendicularly from one edge of the plate, said wall and at least one side of the plate forming a lateral face of the support, said lateral face having at least one first fixing member (91; 91A, 91B) and at least one second fixing member (92; 92A, 92B), each second fixing member having a complementary shape to the first fixing member, each first member and each second member being adapted to be engaged with another second member and another first member, respectively.

2. Prefabricated support according to claim 1, **characterised in that** the first fixing member (91; 91A, 91B) is in one piece with the body (4), and **in that** the second fixing member (92; 92A, 92B) is in one piece with the plate (6).

3. Prefabricated support according to claim 1 or 2, **characterised in that** the body (4) and the plate (6) are made of an electrically insulating material.

4. Electrical device, **characterised in that** it comprises at least one prefabricated support according to any one of claims 1 to 3 and an electrical switching apparatus (200), the electrical switching apparatus being arranged at least in part in the receiving housing (70) of the at least one prefabricated support and being electrically connected to the second end of the electrical conductors of the at least one prefabricated support.

5. Electrical device according to claim 4, **characterised in that** the device comprises:
- a single prefabricated support (2) according to any one of claims 1 to 3;
- an additional electrically insulating partition (600) fixed to the separating wall and comprising a first fixing member (91C) and a second fixing member which are analogous to the first and second members, respectively, of said support, the first fixing member and the second fixing member of the electrically insulating partition being fitted together with the second (92) and the first (91) fixing members, respectively, of the separating wall (100) so as to fix the partition to the separating wall.

6. Electrical device according to claim 4 or 5, **characterised in that** it comprises:
- a first prefabricated support (2A) according to any one of claims 1 to 3,
- a second prefabricated support (2B) according to claim 1 to 3, which second prefabricated support is identical or similar to the first prefabricated support, the second support being fixed to the first support, the first member (91A) of the first support being engaged with the second member (92B) of the second support, and the second member (92A) of the first support being engaged with the first member (91B) of the second support, and the respective separating walls (100A, 100B) of the two supports being in contact with one another.

7. Electrical device according to claim 6, further having a cap (300) which is fixed to the first and second supports on the front face of the device.

8. Electrical device according to claim 6 or 7, **characterised in that** the device further comprises two gripping handles (400), each handle being attached to one of said supports, each handle projecting relative to the front face of each support, the handles being identical and arranged symmetrically to one another relative to the same joining plane (J) formed by the contact surface between the two supports.

9. Electrical device according to claim 8, **characterised in that** at least one of said handles (400) comprises an indexing mechanism for the position of the electrical device in a rack, the handle being equipped with a manual control trigger (402) for the mechanism.
